# EUROPEAN PATENT APPLICATION

(11) **EP 4 019 163 A1**
(43) Date of publication of application: **29.06.2022**
(21) Application number: 20786349.9
(22) Date of filing: 21.05.2020
(51) Int. Cl.: B22F 3/105, B33Y 10/00, B33Y 70/00, C22C 1/04, C22C 21/02

(54) **POWDERED ALUMINIUM MATERIAL**

(30) Priority: 22.08.2019 RU 2019126551
(71) Applicant: Obshchestvo S Ogranichennoj Otvetstvennost'Yu "Institut Legkikh Materialov I Tekhnologij", Ofis 103 (RU)
(72) Inventor: MANN, Viktor Khrist'yanovich, Moscow, 123181 (RU); KROKHIN, Aleksandr Yur'evich, Moscow, 109548 (RU); VAKHROMOV, Roman Olegovich, Lyubertsy, 140000 (RU); POLYAKOV, Sergey Vital'evich, Sankt-Peterburg, 197101 (RU); RYABOV, Dmitriy Konstantinovich, Moscow, 117208 (RU); KOROLEV, Vladimir Aleksandrovich, Moscow, 127642 (RU); DAUBARAYTE, Dar'ya Konstantinovna, Moscow, 123007 (RU); LOGINOVA, Irina Sergeevna, Mytishchi, 141005 (RU)
(74) Representative: Tobiasz-Dumania, Katarzyna
(86) International application number: PCT/RU2020/050103
(87) International publication number: WO 2021/034224

(57) **Abstract**

The invention relates to the field of metallurgy, namely, the new heat-resistant aluminium alloy is claimed for use in the form of a powder for the manufacturing of parts using additive technologies, containing silicon, copper, magnesium, iron, nickel, manganese, chromium, vanadium, including at least one element from the group: zirconium, hafnium, titanium, as well as oxygen (in the case of a powder material). The material in the form of powder has good processability during printing using existing additive technologies and improved strength properties at room temperature and temperatures up to 250°C.

## Description

The invention relates to the field of metallurgy, namely, to the composition of an aluminium-based alloy and its powder for the manufacture of parts using additive technologies.

Additive technologies make it possible to produce parts with high precision from various materials, including aluminium alloys. For various engine-building products, including internal combustion engines, the aluminium alloys with improved heat resistance properties are used. This is due to the need to ensure stable operation of the entire unit under conditions of continuous or periodic heating. This leads to the necessity to develop materials with high characteristics of rupture strength and structural stability under heating.

To manufacture such components, it is necessary to use special aluminium alloys that can be printed without defects manifested as hot cracks and, at the same time, can be operated at the temperatures up to 200-300 °C.

AlSi10Mg aluminium alloy is known, which is used as a powder for the printing of various products using the selective laser melting (SLM) technology, for example, see https://agile-manufacturing.com/files/materials/aluminium.pdf. The alloy may contain 9-11% wt of silicon and 0.2-0.5% wt of magnesium. The presence of silicon in the composition makes the alloy harder and stronger than pure aluminium. Nevertheless, high solidification rates and a small number of thermally stable phases in the structure do not enable to use the material at high temperatures.

An aluminium alloy is known, used as a powder for additive technologies, containing (%wt): silicon 8.5-11.5; magnesium 0.3-1.0; copper 0.3-1.2; zirconium 0.15-0.8; cerium 0.1-0.8; the balance is aluminium and unavoidable impurities (patent RU 2661525, 17.07.2018, C22C 21/02). The alloy has improved strength in comparison with the AlSi10Mg alloy, but similar thermal stability due to a small number of components with high melting point in the composition. This does not enable to use this material for a long-term operation under heating conditions.

An aluminium alloy used for the manufacture of products by laser melting, containing (% wt): magnesium up to 4.3, scandium up to 1.4, zirconium up to 0.55, manganese up to 0.7, is known (application WO 2013/179017, 05.12.2013, B22F 3/105). The disadvantage of this alloy is poor casting properties, leading to the formation of defects during selective laser melting due to thermal stresses. Moreover, the alloy has low rupture strength and creep due to the low resistance of the aluminium-magnesium-based matrix to creep processes.

A rapid-solidified aluminium alloy for the manufacture of pistons is known (RU patent 2468105, 27.11.2012, C22C 21/02). The alloy contains the following components, % wt: silicon 16.0-19.5; copper 3.0-5.0; magnesium 0.7-1.2; manganese 0.3-0.7; iron 0.9-1.5; titanium 0.2-0.5; zirconium 0.15-0.4; aluminium oxide 0.01-0.3; cerium 0.01-0.005; nickel up to 1.3. The alloy has a high wear resistance to friction, a low linear thermal expansion coefficient and good heat resistance. The disadvantage of the known alloy is its high brittleness due to the high content of silicon, copper and nickel, which form a large number of insoluble solid phases. The low ductility indicators do not enable to use this material in printing due to the formation of cracks in the parts caused by high thermal stresses during selective laser melting.

The closest invention to the claimed one is the invention under patent EP 3277854 (B1) 20.02.2019, C22C 21/02, disclosing the aluminium alloy containing the following components (% wt): silicon 9.0-10.5; nickel 0.8-1.9; copper 1.8-3.6; magnesium 0.5-1.0; iron 0.9-1.4; zirconium and/or vanadium 0.05-0.3/0.2 each respectively; manganese no more than 0.4; titanium no more than 0.15; phosphorus at least 0.05; the balance is aluminium and unavoidable impurities. This alloy is characterized by good performance at elevated temperatures and can be used for the manufacture of internal-combustion engine components. However, the disadvantage of the alloy is the low content of iron and other transition metals, which at high cooling rates (typical for additive technologies) leads to insufficiently high strength as well as to reduced wear resistance in comparison with hypereutectic Al-Si alloys used for internal-combustion engine components, for example, see http://aluminium-guide.ru/evtekticheskij-silumin/.

Hypereutectic Al-Si alloys with the silicon content of more than 17% have a low density of 2.6-2.7 g/cm³ and a satisfactory strength. In the cold state, the elongation reaches 3-6% and the reduction of area reaches 4-9%. These alloys retain their strength down to -70 °C. Al-Si alloys are characterized by good processability and consumer properties: high fluidity, small shrinkage during solidification; good weldability; satisfactory corrosion resistance; thermal and wear resistance; low thermal linear expansion coefficient; for example, see http://elar.urfu.ru/bitstream/10995/33273/1/itvmim_2012_40.pdf

The technical objective of present invention is the development of a new heat-resistant aluminium material for use as a powder for the manufacturing of parts using additive technologies, which has improved strength properties at elevated temperatures and high rupture strength for an enhanced components' lifetime.

For implementation of this task and achievement of these advantages, a new heat-resistant aluminium alloy with the following component content (% wt) is claimed.

| | |
|---|---|
| silicon | 7.0-8.85 |
| copper | 1.0-3.0 |
| magnesium | 0.5-2.0 |
| iron | 0.5-2.0 |
| nickel | 1.0-2.5 |
| manganese | 0.45-1.3 |
| vanadium | 0.1-0.45 |
| chromium | 0.1-0.45 |

and at least one element from the group including:

| | |
|---|---|
| zirconium, hafnium, titanium | total of 0.1-0.5 |
| aluminium and unavoidable impurities | balance. |

In this instance, it is reasonable that the total content of alloying elements, except for silicon, copper and magnesium, should not exceed 5% wt.

It is also reasonable that the silicon-based phase in the structure of the material after printing and heat treatment should have the size of no more than 6 µm.

The addition of silicon in the specified amount provides high fluidity properties and low hot-crack sensitivity, which ensures a high processability of the alloy during printing (to avoid hot cracks). Besides, due to high cooling rates, an ultrafine structure of silicon is formed, which increases the strength of the material and provides a satisfactory level of ductility.

The addition of copper leads to the both additional solid-solution hardening and hardening due to the formation of dispersed phases with transition metals, increasing their volume fraction. Moreover, together with magnesium, copper forms Al₂CuMg type phase, which is an effective hardener formed during the ageing process after quenching, which enables to use the material after various types of heat treatment. Additionally, magnesium improves the strength of the aluminium matrix by forming a solid solution.

Iron and nickel alloying contributes to the formation of additional eutectic phases, which enhance the material's printing processability and promote the reduction of pores and cracks. Besides, they form low diffused thermally stable phases Al₃Ni and Al₅FeNi types, which can dissolve copper and significantly improve the material's resistance to deformation at high temperatures.

The addition of manganese also contributes to the formation of thermally stable phases with iron and nickel. The content of manganese in the aluminium alloy is restrained by the limit of its maximum solubility to avoid the formation of an excessive amount of primary intermetallic compounds. At the same time, it has been found that manganese has a beneficial effect on the morphology of iron-silicon phases, without leading to a strong decrease in ductility.

Magnesium and copper are added both for formation of a supersaturated solid solution due to their high solubility in aluminium and for formation of dispersoids during heat treatment, which improve the strength properties.

Chromium and vanadium are added to form a supersaturated solid solution for a subsequent formation of dispersoids with aluminium during heat treatment. The maximum chromium content in the aluminium alloy is lower than the maximum solubility at the peritectic reaction temperature according to the phase equilibrium diagram, which, considering the high cooling rates in the production of powders and during printing process, enables to form a supersaturated solid solution with a subsequent precipitation of Al₇Cr or Al₁₈Cr₂Mg₃ type. Vanadium is also added at the maximum solubility level during peritectic reaction temperature.

Moreover, to avoid the formation of excessive primary intermetallic compounds, the content of some elements is selected considering their maximum solubility in the aluminium alloy. It has been determined experimentally that this condition executed within the specified ranges.

The addition of elements from the group of zirconium, titanium, hafnium provides for additional refinement of the material structure after printing, which results in an increased level of desirable properties; besides, in the course of annealing or heating for quenching, additional dispersoids are formed due to the decomposition of a supersaturated solid solution formed at fast cooling rates during printing.

It is important that, compared to the prototype, phosphorus is excluded from the alloy composition, since this element is easily to evaporate and burns out during the melt overheating, which prevents from using it efficiently to modify eutectics. Moreover, the 3D printing process takes place with sufficiently high cooling rates, which ensures sufficient refinement of silicon-based phases without adding special grain refiners.

It is known that phosphorus is added into Al-Si alloys as a grain refiner for refinement of the structure of primary silicon. In the claimed alloy, the solidification processes occur according to the metastable phase diagram, while the high rate of solidification during gas atomization (at least 10³ K/s) as well as in the course of selective laser melting (SLM) (at least 10⁵ K/s) ensures the formation of an ultrafine structure of the material that prevents from the appearance of primary silicon, and, therefore, additional modification with phosphorus is impractical and not required.

The composition of the powder aluminium material includes oxygen in the amount of 0.001-0.2% wt, which is necessary for passivation of the powder surface and the avoidance of uncontrolled combustion in the air during the oxidation process. The specified oxygen concentration is sufficient to form a thin protective oxide film, which does not significantly reduce the ductility in the finished product. Excessive contamination of the alloy with non-metallic (oxide) inclusions leads to clogging of the nozzle and violations in the powder production technology. Besides, oxides are centres of gas porosity, which will lead to the formation of a poor-quality powder.

It is also experimentally established that the content of transition metals with low solubility in the claimed aluminium alloy should be limited to 5% wt to avoid the formation of many insoluble intermetallides that lead to low ductility and crack formation during the printing process due to high internal stresses and deformations caused by them.

The drawings show:
Fig. 1 - Powder particles from the claimed alloy, produced by gas atomization of the melt as per embodiment 1;
Fig. 2 - Process of selective laser melting (SLM) of the powder and specimens from the claimed alloy for testing as per embodiment 1;
Fig. 3 - Image of the material microstructure in the scanning electron microscope (SEM) showing that the claimed material has an ultra-fine structure;
Fig. 4 - Images of microstructures of alloy specimens A, B, C, D from embodiment 2 in the optical microscope;
Fig. 5 - Appearance of cubes of alloys C and D with defects as per embodiment 2.
   Mentioned defects are the result of low ductility of the material, leading to cracks as a result of relaxation of thermal stresses.
Fig. 6 - Test results of the Al-Si-Fe-Ni alloy for rupture strength as per embodiment 3 (diagram of the load level as a function of time to material rupture at 250 °C).

Based on this diagram, one can assess the level of rupture strength of printed products.

### Embodiments

### Embodiment 1

The powders of aluminium alloys of various compositions in accordance with Table 1 were produced by gas atomization in the nitrogen environment. The melt was prepared in an electric-heated furnace.

For preparation, aluminium of at least grade A7 as per GOST 11069-2001, magnesium MG90 as per GOST 804-93, copper M1 as per GOST 859-2001, silicon 4001 as per GOST 2169-69 and master alloys of other elements were used.

After preparation of the melt and inspection of the chemical composition, the alloy was overheated to the temperature of 860-920 °C and atomized in nitrogen with adding oxygen in the amount of 0.1-0.8% wt for control of the oxygen content of the powder.

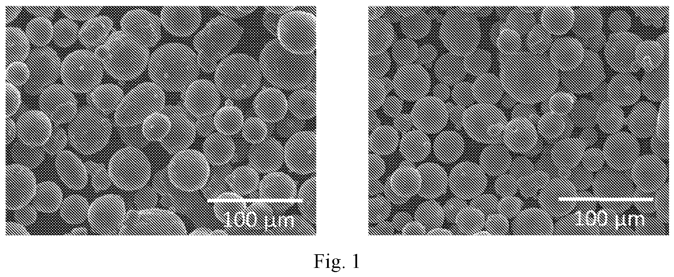

The resulting powders were classified to separate the fraction of D50=45 ± 5 µm. The image of the powder in the scanning electron microscope is shown in Fig. 1. The selective laser melting of the powder was performed using an EOS M290 3D printer (https://www.eos.info/eos-m290) in argon atmosphere with various parameters for the formation of a solid structure (without hot cracks) with the specified level of porosity.

The porosity of the printed material was determined on cubes using the metallographic method with a Zeiss Axio Observer optical microscope on polished specimens without any additional etching.

Additionally, the structure was studied on foils made from specimens using a transmission electron microscope JEOL 2100.

The porosity of materials under the most optimum printing parameters was less than 0.35% vol.

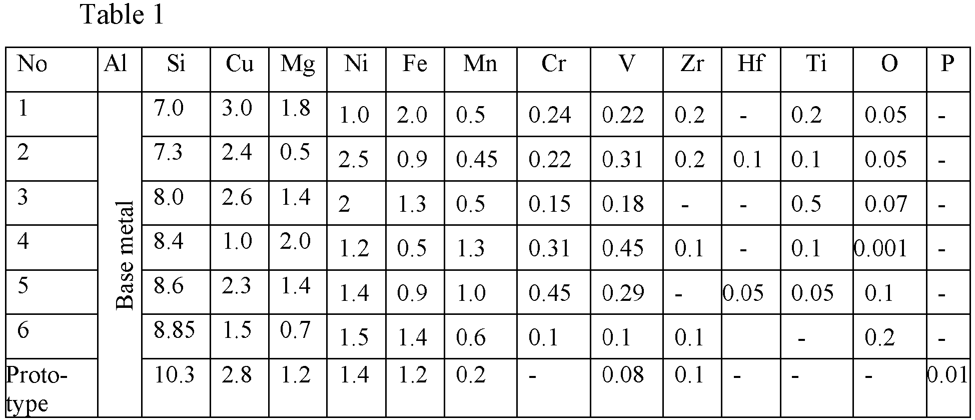

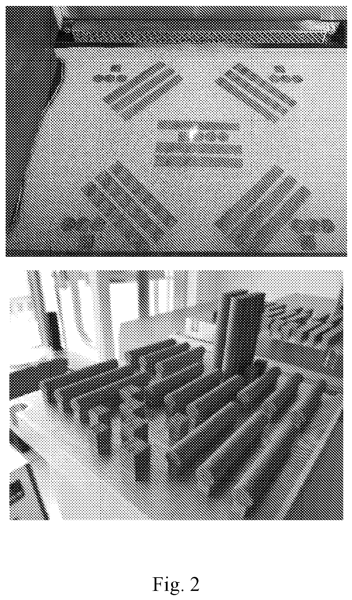

Using the selected parameters, specimens were printed to determine mechanical tensile properties at room temperature and rupture strength (Fig. 2).

Heat treatment (annealing) for stress relief was performed at 250 °C for 2 hours.

Tensile strength was determined as per GOST 1497-84 on cylindrical specimens machined to the required surface roughness.

Tensile strength at elevated temperatures was determined as per GOST 9651-84, and rupture strength was determined as per GOST 10145-81.

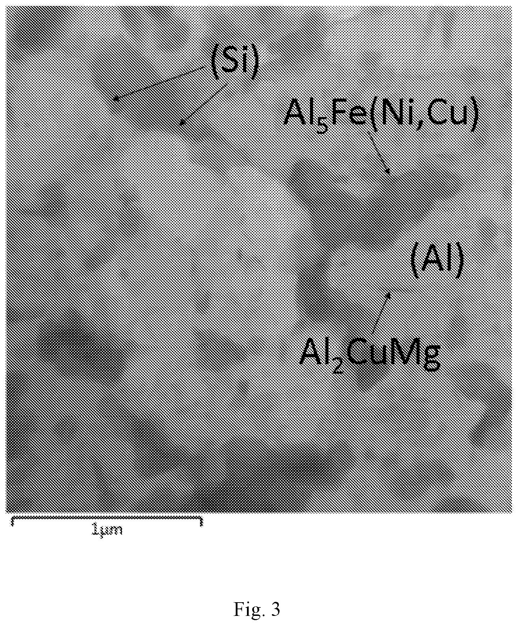

Before testing, the material was annealed to stabilize its structure. The results of the studies are given in Table 2. The image (obtained using a transmission electron microscope) of the structure of the printed material is shown in Fig. 3.

The size of silicon particles does not exceed 3-5 µm, which makes it possible to achieve high strength and maintain ductility at a satisfactory level.

**Table 2**

| No | Ultimate tensile strength at 20 °C, MPa | Ultimate tensile strength at 250 °C, MPa | Elongation at 20 °C, % | Rupture strength based on 100 h at 250 °C, MPa |
|---|---|---|---|---|
| 1 | 360 | 160 | 4.0 | 115 |
| 2 | 365 | 170 | 4.6 | 124 |
| 3 | 355 | 165 | 4.1 | 110 |
| 4 | 365 | 165 | 5.0 | 117 |
| 5 | 375 | 170 | 3.8 | 130 |
| 6 | 350 | 155 | 4.9 | 111 |
| Prototype | 315 | 110 | 5.2 | 88 |

As it is seen from Table 2, the claimed alloy has increased strength at room and elevated temperatures by 10-15% and improved long-term strength. This enables to use printed parts for loaded components operating under process and operational heating conditions.

### Embodiment 2

Powders of the experimental compositions were produced using a technology similar to that described in embodiment 1. The chemical composition of the alloys is shown in Table 3. The alloys differ mainly in the content of alloying elements, except for silicon, magnesium and copper.

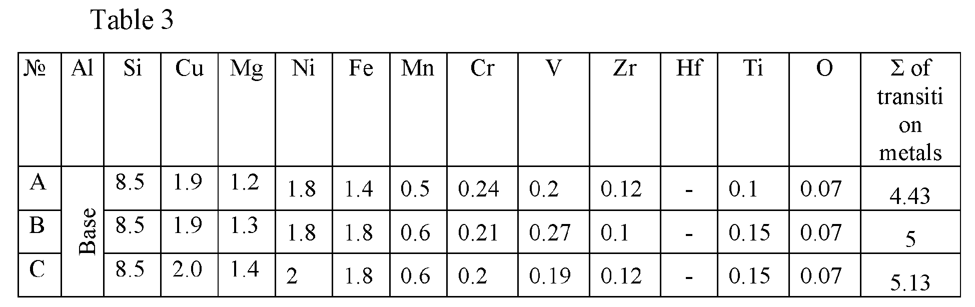

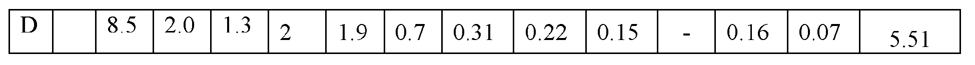

The EOS M290 3D-printer was used for the selective laser melting process. To reduce residual stresses, the process was conducted with the platform heated to 200 °C. Printing was performed with various parameters to determine the porosity and presence of defects. The porosity was determined on polished specimens by the metallographic method without additional etching.

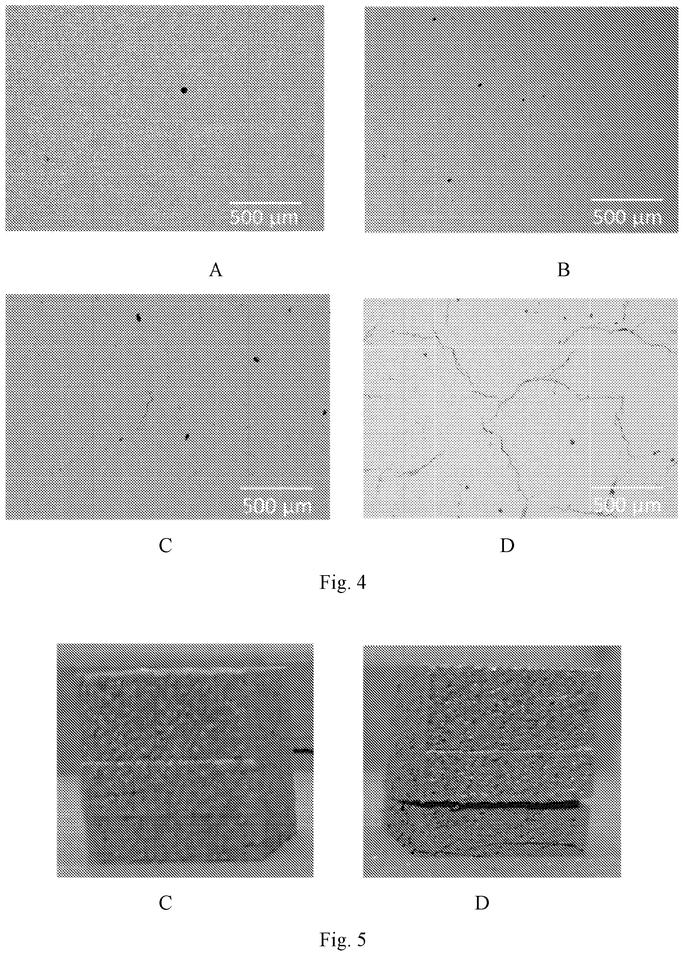

Images of the structure are shown in Fig. 4. As seen from the figures, when printing on the specimens of alloys C and D, cracks were formed, which was caused by the low ductility of the material and high internal stresses upon rapid solidification of layers of the deposited metal.

Also, Fig. 5 shows images of specimens in the form of cubes with cracks caused by relaxation of internal stresses combined with low ductility.

The results of the measurement of porosity and the presence of other defects are shown in Table 4.

**Table 4**

| No | Porosity, % vol. | Macrocracks on the cubes |
|---|---|---|
| 1 | 0.35 | No |
| 2 | 0.29 | No |
| 3 | 0.33 | Small cracks at the end faces |
| 4 | 0.49 | Laminations |

As seen from Table 4, the increased content of additives with poor solubility in aluminium leads to the formation of an unsatisfactory structure due to reduced ductility of the material.

### Embodiment 3

Powder with the chemical composition as per Table 5. The powder was produced by atomization at 870 °C in nitrogen with adding oxygen in the amount of 0.3%. The powder was classified to separate the fraction of +15\-63 µm.

**Table 5**

| N_{º} | Al | Si | Cu | Mg | Ni | Fe | Mn | Cr | V | Zr | Hf | Ti | O |
|---|---|---|---|---|---|---|---|---|---|---|---|---|---|
| E | Base metal | 8.5 | 2.2 | 0.9 | 1.6 | 1.4 | 0.5 | 0.24 | 0.2 | 0.21 | - | 0.03 | 0.06 |

The EOS M290 3D-printer was used for the selective laser melting process. Printing was carried out with heating of the platform up to 170 °C. The process was conducted in argon atmosphere, the printing speed was 750-1000 mm/s with the laser power in the range of 280-320 W. The maximum layer thickness was 50 µm. The products were 8 cylinders with a diameter of 12-30 mm and a length of 80 mm, located vertically on the platform. Upon completion of the printing process, the manufactured products were machined to obtain the geometry of tensile specimens as per GOST 1497. One part of the specimens was tested without heat treatment, the rest was annealed at the temperature of 200 °C below the melting starting point. The results of the tensile tests are shown in Table 6.

**Table 6**

| No | Ultimate tensile strength at 20 °C, MPa | Yield strength at 20 °C, MPa |
|---|---|---|
| Without heat treatment | | |
| 1 | 380 | 265 |
| 2 | 385 | 260 |
| 3 | 375 | 260 |
| 4 | 380 | 270 |
| Annealed | | |
| 5 | 340 | 200 |
| 6 | 350 | 210 |
| 7 | 350 | 205 |
| 8 | 335 | 205 |

Then the products were printed in the form of 8 cylinders with a diameter of 12 mm and a height of 70 mm, after which they were machined to obtain specimens for rupture strength tests, which meet the requirements of GOST 10145. The tests were performed at 250 °C and different load levels. During the tests, the time to rupture of the specimen was recorded.

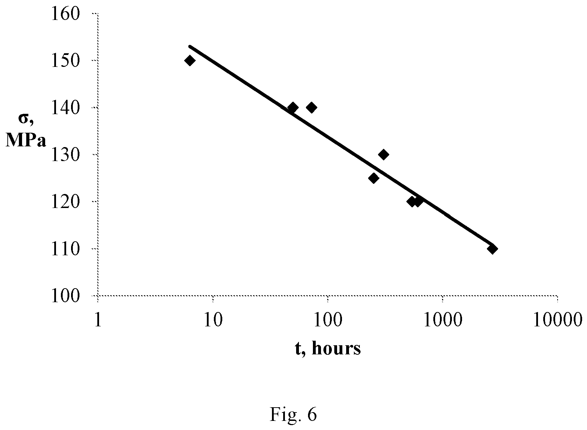

The results of rupture strength tests of the specimens at 250 °C is shown in the diagram (Fig. 6). The results show that the material after printing has a high resistance to rupture at elevated temperatures. Rupture strength of the specimens based on 100 hours exceeds 120 MPa.

Thus, according to the stated data and embodiments, the claimed objective is solved, and the specified technical result is achieved owing to the following set of essential features that characterize the claimed group of inventions:
An aluminium alloy containing silicon, copper, magnesium, iron, nickel, manganese, chromium, vanadium differing from the prototype in that it contains additionally at least one element from the group: zirconium, hafnium, titanium, as well as oxygen (in the event of the powder material), with the following component ratio,% wt:

| | |
|---|---|
| silicon | 7.0-8.85 |
| copper | 1.0-3.0 |
| magnesium | 0.5-2.0 |
| iron | 0.5-2.0 |
| nickel | 1.0-2.5 |
| manganese | 0.45-1.3 |
| chromium | 0.1-0.45 |
| vanadium | 0.1-0.45 |
| zirconium and/or hafnium and/or titanium | 0.1-0.5 |
| aluminium and unavoidable impurities | balance |

Preferably, the total content of alloying elements, except for silicon, copper and magnesium, will not exceed 5% wt.

The above aluminium alloy is intended for use in the form of a powder for the manufacture of parts using additive technologies, wherein the size of the silicon-based phase in the structure of the material after printing is no more than 6 µm, and the powder also contains oxygen in the amount of 0.001-0.2% wt. In turn, the alloy does not contain oxygen as an alloying element (i.e. above the equilibrium concentration) to avoid contamination of the melt with oxide spots, being a consequence of the high reactivity of aluminium and oxygen, which leads to an increased gas porosity due to deposition of gases and hinders the normal powder production process due to clogging of the nozzle tip.

Also, a method for the manufacturing of products using additive technologies, which, unlike the prototype, uses the above aluminium alloy in the form of a powder and which has several non-obvious advantages, is claimed.

The product (produced using additive technologies) from the claimed aluminium alloy of the specified composition, namely, the powder aluminium material, as printed or heat-treated, has the ultimate tensile strength of at least 320 MPa at room temperature.

## Claims

1. An aluminium alloy containing silicon, copper, magnesium, iron, nickel, manganese, chromium, vanadium, **characterized in that** it contains additionally at least one element from the group: zirconium, hafnium, titanium, with the following ratio of main components,% wt:
| | |
|---|---|
| silicon | 7.0-8.85 |
| copper | 1.0-3.0 |
| magnesium | 0.5-2.0 |
| iron | 0.5-2.0 |
| nickel | 1.0-2.5 |
| manganese | 0.45-1.3 |
| chromium | 0.1-0.45 |
| vanadium | 0.1-0.45 |
| zirconium and/or hafnium and/or titanium | 0.1-0.5 |
| aluminium and unavoidable impurities | balance. |

2. An aluminium alloy according to claim 1, **characterized in that** the total content of alloying elements, except for silicon, copper and magnesium, does not exceed 5% wt.

3. An aluminium alloy according to claim 1, **characterized in that** it is used as a powder for the manufacture of products with additive technologies.

4. A powder aluminium material for the manufacture of products using additive technologies, produced from the aluminium alloy, **characterized in that** the composition of the aluminium alloy corresponds to claim 1.

5. A powder aluminium material as per claim 4, which contains additionally oxygen in the amount of 0.001-0.2% wt.

6. A method for the manufacture of products using additive technologies, **characterized in that** the powder aluminium material as per any of claims 4, 5 is used.

7. A product from the powder aluminium material as per any of claims 4, 5, produced using additive technologies and having, as printed or heat-treated, the ultimate tensile strength of at least 320 MPa at room temperature.
